# EUROPEAN PATENT SPECIFICATION

(11) **EP 3 148 038 B1**
(45) Date of publication and mention of the grant of the patent: **25.07.2018**
(21) Application number: 14892824.5
(22) Date of filing: 19.09.2014
(51) Int. Cl.: H02J 7/00

(54) **CHARGING CONTROL METHOD AND APPARATUS, TERMINAL AND COMPUTER STORAGE MEDIUM**
LADESTEUERUNGSVERFAHREN UND -VORRICHTUNG, ENDGERÄT UND COMPUTERSPEICHERMEDIUM
PROCÉDÉ ET APPAREIL DE COMMANDE DE CHARGE, TERMINAL ET SUPPORT DE STOCKAGE INFORMATIQUE

(30) Priority: 19.05.2014 CN 201410211643
(43) Date of publication of application: 29.03.2017
(73) Proprietor: ZTE Corporation, Shenzhen, Guangdong 518057 (CN)
(72) Inventor: WANG, Xiaowei, Shenzhen Guangdong 518057 (CN)
(74) Representative: Studio Torta S.p.A.
(86) International application number: PCT/CN2014/086900
(87) International publication number: WO 2015/176430

(56) References cited:
- CN-A- 102 403 770
- CN-A- 102 403 770
- CN-A- 103 378 378
- CN-A- 103 647 318
- CN-A- 103 677 191
- CN-A- 103 677 191
- CN-A- 103 746 427
- US-A1- 2005 007 075
- US-A1- 2008 203 969
- US-A1- 2008 203 969
- US-A1- 2010 090 647
- US-A1- 2011 267 009

## Description

### TECHNICAL FIELD

The present disclosure relates to the field of charging in mobile communications, and more particularly, to a charging control method and apparatus, a terminal and a computer storage medium.

### BACKGROUND

With rapid development of communications technologies, screens of mobile terminal products such as mobile phones and portable devices (PAD)have become bigger, and functions thereof are more and more, power consumption of mobile terminals is larger and larger when users generally perform concurrent operations on a plurality of applications. On the basis of a fact that at present no apparent breakthrough is made in terms of battery capacity technologies, many users may connect mobile terminals with charging adapters or charge pals and perform various operations on the mobile terminals in a high-power state, which may cause currents consumed by the mobile terminals are greater than the charging currents and thus make the charging adapters continuously work in an overcurrent state, thereby easily causing the charging adapters to be damaged and incurring accidents. Meanwhile, interfaces of the charging adapters of the current mobile terminals tend to unification, and most of the interfaces are USB interfaces. Therefore, different charging adapters may be blended in use to charge the mobile terminals. However, different charging adapters may output currents of different magnitudes when charging. Therefore, the foregoing problems may also occur if different charging adapters are blended in use for charging.

To solve the foregoing problems, a solution is proposed to safely and efficiently use various types of USB charging adapters by automatically identifying optimum charging currents of the USB charging adapters. However, this solution is merely applicable to cases where various charging adapters are blended in use, and a part of the charging adapters still work in an overcurrent state. If so, the charging adapters in an overcurrent state still may be damaged, thereby incurring accidents.

Therefore, it is a problem to be solved urgently at present how to make the charging adapters work in a normal state.

Document CN102403770 provides a device and method for charging a super capacitor. Document CN103677191 discloses an electronic system, an electronic device and a power management method, for constant-power supply.

Document US 2010/090647 relates to a charging apparatus for charging, for example, a battery pack.

Document US2005007075 relates generally to the field of electronics, and more particularly, to battery charger circuits and methods of operating the same.

Document US2011267009 relates to a charge control circuit that controls charging of a rechargeable battery, and to a battery pack and to a charge system that are provided with the charge control circuit.

### SUMMARY

Aiming at solving the problems in the prior art, the present invention provides a charging control method, an apparatus, a terminal and a computer storage medium, as defined in the annexed claims.

In particular, embodiments of the present disclosure provide a charging control method, including:
collecting a charging voltage; and
controlling the charging voltage to be not less than a preset charging voltage threshold when determining that the charging voltage collected is not greater than a preset voltage value.

In the above solution, the method further includes:
monitoring the charging voltage in real time during a charging process, and
canceling the preset charging voltage threshold when determining that the charging voltage collected is greater than the preset voltage value.

In the above solution, before determining that the charging voltage is not greater than a preset voltage value, the method further includes:
presetting a charging identification of the charging voltage threshold; and
setting an initial state of the charging identification of the charging voltage threshold as an invalid state.

In the above solution, when determining that the charging voltage collected is not greater than the preset voltage value, the method further includes:
setting a state of the charging identification of the charging voltage threshold as a valid state; and
presenting a user with a prompt for suggesting closing a background application according to the set valid state of the charging identification of the charging voltage threshold.

In the above solution, the method further includes:
resetting the state of the charging identification of the charging voltage threshold as the invalid state when determining that the charging voltage collected is greater than the preset voltage value.

In the above solution, the controlling the charging voltage to be not less than the charging voltage threshold includes:
controlling a part of power supply required by a terminal to be acquired from a charging adapter and another part of power supply required by the terminal to be acquired from a battery of the terminal.

The embodiments of the present disclosure further provide a charging control apparatus, including: a collecting module and a determining module, where
the collecting module is configured to collect a charging voltage; and the determining module is configured to control the charging voltage to be not less than a preset charging voltage threshold when determining that the charging voltage collected by the collecting module is not greater than a preset voltage value.

In the above solution, the determining module is further configured to monitor the charging voltage in real time during a charging process, and cancel the preset charging voltage threshold when determining that the charging voltage collected by the collecting module is greater than the preset voltage value.

In the above solution, the determining module is further configured to: preset a charging identification of the charging voltage threshold before determining that the charging voltage is not greater than a preset voltage value; and set an initial state of the charging identification of the charging voltage threshold as an invalid state.

In the above solution, the apparatus further includes an information prompting module, where
the determining module is further configured to set the state of the charging identification of the charging voltage threshold as a valid state when determining that the charging voltage collected is not greater than the preset voltage value; and
the information prompting module is configured to present a user with a prompt for suggesting closing a background application according to the set valid state of the charging identification of the charging voltage threshold.

In the above solution, the determining module is further configured to reset the state of the charging identification of the charging voltage threshold as the invalid state when determining that the charging voltage collected is greater than the preset voltage value.

The embodiments of the present disclosure further provide a terminal, which includes the charging control apparatus described above.

The embodiments of the present disclosure further provide a computer storage medium, which includes a set of instructions, where when the instructions are executed, at least one processor is caused to execute the charging control method described above.

According to the charging control method and apparatus, the terminal and the computer storage medium provided by the embodiments of the present disclosure, a charging voltage is collected, and the charging voltage is controlled to be not less than a preset charging voltage threshold when determining that the charging voltage collected is not greater than a preset voltage value. As such, in the event of current overload of a charging adapter, the charging voltage and the power of the charging adapter can be ensured not to excessively drop, thereby preventing the charging adapter from being damaged.

### BRIEF DESCRIPTION OF THE DRAWINGS

In accompanying drawings (may be not drawn in scale), similar reference numerals may describe similar parts in different views. Similar reference numerals having different letter suffixes may denote different examples of similar parts. The accompanying drawings roughly show various embodiments discussed herein by way of examples instead of restriction manners.
FIG. 1 is a flow chart illustrating a charging control method according to Embodiment I of the present disclosure;
FIG. 2 is a block diagram illustrating a charging control apparatus according to Embodiment II of the present disclosure;
FIG. 3 is a schematic diagram illustrating direction of current when a mobile terminal is being charged according to Embodiment III of the present disclosure; and
FIG. 4 is a flow chart illustrating a charging control method according to Embodiment III of the present disclosure.

### DETAILED DESCRIPTION

To better understand contents of the present disclosure, the problems in the prior art may be introduced first herein. In practical application, for example, a standard configuration of a charging adapter of a certain mobile phone is that rated charging voltage/rated charging current is 5V/1A. When a screen of the mobile phone is set at a maximum brightness, a video is being played at maximum volume, some applications are running in background and meanwhile radio-frequency emission is at a maximum power, the current consumed by the mobile phone may reach above 1.0A, for example 1.1A. In such a case, when the current consumed by the mobile phone is greater than the rated charging current of the charging adapter, the charging current supplied by the charging adapter is 1.1A if the mobile phone is connected to the charging adapter and is continued to be used, namely the charging adapter works in an overcurrent state. For another example, in the above case, a user may charge the mobile phone by using a charging adapter whose standard configuration is that rated charging voltage/rated charging current is 5V/500mA, and the charging adapter may also continuously work in an overcurrent state beyond 500mA. Some applications may include WeChat™, QQ™, Bluetooth™, games and so on, where the WeChat™ and QQ™ are chatting tools.

If the charging adapter works in an overcurrent state for a long time, the voltage outputted by the charging adapter may gradually drop. When the charging voltage of the charging adapter is unrestricted, the voltage of the charging adapter may drop very low, which may cause an actual working power to be less than the rated power of the charging adapter. As such, in one aspect, this may cause that the charging adapter cannot charge the mobile terminal efficiently, namely, a conversion efficiency in converting energy into an actual circuit by means of a power management integrated circuit (PMIC) of the mobile terminal is low, which may cause the current reversely supplied by a battery to the mobile terminal is excessive and consumption of battery energy is accelerated. In another aspect, the charging adapter may be caused to get hot and be easy to get aging. Therefore, the service life and stability of the charging adapter are greatly affected.

In prior art, the problem of overcurrent of a USB charging adapter may be solved through a method of automatically identifying the optimum charging current of the charging adapter, so that various types of USB charging adapters can be used safely and efficiently. However, such a method is merely applicable to cases where various types of charging adapters are blended in use.

At present, most of charging adapters have upper limits on an output current. However, PMICs of many mobile terminals have no function of setting limits on input charging current. Therefore, schemes provided by the prior art may cause a part of charging adapters to work in an overcurrent state. In addition, since different mobile terminals have different charging strategies and design of the charging strategies is relatively complicated, if the mobile terminals are charged by using different types of charging adapters, this may cause that the charging strategies of the charging adapters conflict with those of the mobile terminals. Therefore, this method cannot be modularized or applied to various mobile terminals, and hence its application scope is quite limited.

Based on this, in various embodiments of the present disclosure, a charging voltage is collected, and the charging voltage is controlled to be not less than a preset charging voltage threshold when determining that the charging voltage collected is not more than a preset voltage value.

Following further describes in detail the technical solution of the present disclosure with reference to the accompanying drawings and specific embodiments.

### Embodiment I

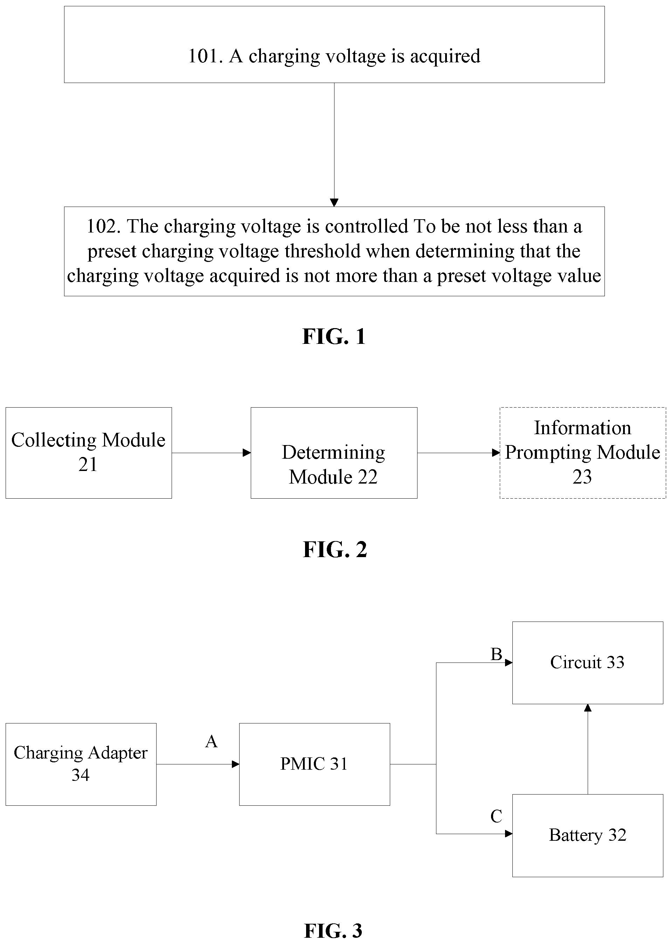

This embodiment provides a charging control method, as shown in FIG. 1, the method mainly includes following steps.

Step 101: a charging voltage is collected.

In this step, when a terminal is charged, the charging voltage outputted by the charging adapter needs to be collected in real time.

Step 102: the charging voltage is controlled to be not less than a preset charging voltage threshold when determining that the charging voltage collected is not greater than a preset voltage value.

In this step, the preset voltage value may be equal or unequal to the preset charging voltage threshold.

The method may further include: controlling the charging voltage to be not less than the preset charging voltage threshold when determining that the charging voltage collected is not greater than the preset voltage value.

A charging identification of the charging voltage threshold is preset before determining that the charging voltage is not greater than a preset voltage value to identify whether the current consumed by the terminal exceeds the rated current of the charging adapter. In an embodiment, an initial state of the charging identification of the charging voltage threshold is set as an invalid state.

During a charging process, the charging voltage outputted by the charging adapter is collected, a state of the charging identification of the charging voltage threshold is set as a valid state when it is determined that the charging voltage is not greater than the preset voltage value, and a prompt for suggesting closing a background application(s) is presented to a user according to the set valid state of the charging identification of the charging voltage threshold. Specifically, an information prompt box may be presented to the user through a user interface (UI) of the terminal to prompt the user that the current consumed by the terminal at the moment has already exceeded the rated current of the charging adapter and to suggest the user to close a related application running in background. In an embodiment, the information prompt box may also provide the user with a selective prompt whether to continue remind. When the user selects "no longer remind", namely after receiving an instruction of no longer reminding the user, in a subsequent charging process, when the state of the charging identification of the charging voltage threshold changes from a valid state to an invalid state or changes from the valid state to the invalid state, the information prompt box will not appear any more to avoid interfering with the user.

The state of the charging identification of the charging voltage threshold being an invalid state includes: a state value of the charging identification of the charging voltage threshold being 0; and correspondingly, the state of the charging identification of the charging voltage threshold being a valid state includes: the state value of the charging identification of the charging voltage threshold being 1.

In an embodiment, the working principle of the charging adapter decides that the power of the charging adapter is fixed. Therefore, when the charging voltage outputted by the charging adapter is lower than the rated voltage, the current consumed by the terminal may exceed the rated current of the charging adapter. Hence, when the charging identification is the valid state, it is determined that the current consumed by the terminal has already exceeded the rated current of the charging adapter.

In addition, the charging voltage needs to be monitored in real time during the charging process, and the preset charging voltage threshold is canceled when determining that the charging voltage is greater than the preset voltage value.

Specifically, when the terminal is kept away from a high-power usage scenario, the charging adapter does not work in an overcurrent state any more, and thus the charging voltage outputted therefrom will gradually rise. When the charging voltage is greater than the preset voltage value, the preset charging voltage threshold is canceled, charging is carried out according to the original charging strategy, and the charging identification of the charging voltage threshold is reset to the invalid state until the charging process is ended.

In practical application, a voltage monitoring range from 4.7V to 4.75V may be preset. In an embdoment, the voltage value may be preset as 4.75V, when it is determined that the charging voltage collected is not greater than 4.75V, correspondingly the minimum voltage value 4.7V within the voltage range is set as the charging voltage threshold. At the moment, the preset voltage value is unequal to the preset voltage threshold. Alternatively, the voltage value also may be preset as 4.7V, when it is determined that the charging voltage collected is not greater than 4.7V, correspondingly the minimum voltage value 4.7V within the voltage range is set as the charging voltage threshold. At the moment, the preset voltage value is equal to the charging voltage threshold.

During the charging process, when the charging voltage is greater than 4.75V, setting of the charging voltage threshold of 4.7V is canceled, charging is carried out according to the original charging strategy, and the charging identification of the charging voltage threshold is reset to the invalid state until the charging process is completed.

When it is determined that the charging voltage is not greater than the preset voltage value, the charging voltage is controlled to be not less than the set charging voltage threshold, a part of power supply required for the terminal is controlled to be acquired from the charging adapter, and another part of power supply required for the terminal is controlled to be acquired from a battery of the terminal. In this way, the charging adapter is maintained at a constant voltage state, namely the power of the charging adapter is maintained at a constant state to ensure that the PMIC of the terminal can efficiently convert electricity into an actual circuit, namely, the terminal is ensured to be charged efficiently.

In practical application, for example, when the terminal needs a current of 1.5A, the charging adapter is controlled to supply a current of 1A to the terminal, and the battery of the terminal is controlled to supply the terminal with a current of 0.5A.

In practical application, if the voltage range is set between 4.7V and 4.75V, during a charging process, the charging voltage shall be controlled not less than 4.7V.

According to the charging control method provided by this embodiment, in the event of current overload of a charging adapter, the charging voltage and the power of the charging adapter can be ensured not to excessively drop, thereby preventing the charging adapter from being damaged.

In addition, in the charging control method provided by this embodiment, no complex algorithm or logic is needed, and an efficient conversion of the PMIC can be ensured.

Furthermore, when a charging process is sufficiently safe, by selecting the information prompt box, the user is not prompted with information indicating that the current consumed by the terminal has already exceeded the rated current of the charging adapter, thereby improving the user experience.

### Embodiment II

Corresponding to Embodiment I, this embodiment further provides a charging control apparatus, as shown in FIG. 2, the apparatus includes: a collecting module 21 and a determining module 22.

The collecting module 21 is configured to collect a charging voltage.

The determining module 22 is configured to control the charging voltage to be not less than a preset charging voltage threshold when determining that the charging voltage collected by the collecting module 21 is not greater than a preset voltage value.

The preset voltage value may be equal or unequal to the preset charging voltage threshold. The determining module 22 is further configured to control the charging voltage to be not less than the preset charging voltage threshold when determining that the charging voltage collected is not greater than the preset voltage value.

The determining module 22 presets a charging identification of the charging voltage threshold before determining that the charging voltage is not greater than the preset voltage value to identify whether the current consumed by the terminal exceeds the rated current of the charging adapter. In an embodiment, the determining module 22 sets an initial state of the charging identification of the charging voltage threshold as an invalid state.

During a charging process, the determining module 22 is configured to set the state of the charging identification of the charging voltage threshold as a valid state when determining that the charging voltage collected by the collecting module 21 is not greater than the preset voltage value.

Correspondingly, the apparatus further includes an information prompting module 23.

When the determining module 22 sends the valid state of the charging identification of the charging voltage threshold to the information prompting module 23, the information prompting module 23 is configured to present a user with a prompt for suggesting closing a background application according to the set valid state of the charging identification of the charging voltage threshold. Specifically, an information prompt box may be presented to the user through the UI of the terminal to prompt the user that the current consumed by the terminal at the moment has already exceeded the rated current of the charging adapter and to suggest the user closing a related application running in background. In an embodiment, the information prompting module 23 is further configured to provide the user with a selective prompt whether to continue remind. After receiving an instruction of no longer reminding the user, in a subsequent charging process, when the state of the charging identification of the charging voltage threshold changes from a valid state to an invalid state or changes from the valid state to the invalid state, no information prompt is provided to the user any more to avoid interfering with the user.

The information prompting module 23 may be provided in an application layer of the terminal. The state of the charging identification of the charging voltage threshold being an invalid state may include: a state value of the charging identification of the charging voltage threshold being 0; and correspondingly, the state of the charging identification of the charging voltage threshold being a valid state may include: the state value of the charging identification of the charging voltage threshold being 1.

In an embodiment, the working principle of the charging adapter decides that the power of the charging adapter is fixed. Therefore, when the charging voltage outputted by the charging adapter is lower than the rated voltage, the current consumed by the terminal may exceed the rated current of the charging adapter. Hence, when the charging identification is the valid state, it is determined that the current consumed by the terminal has already exceeded the rated current of the charging adapter.

In addition, the determining module 22 also needs to monitor the charging voltage in real time during a charging process, and the preset charging voltage threshold is canceled when the determining module 22 determines that the charging voltage is greater than the preset voltage value.

Specifically, when the terminal is kept away from a high-power usage scenario, the charging adapter does not work in an overcurrent state any more, and thus the charging voltage outputted therefrom will gradually rise. When the charging voltage is greater than the preset voltage value, the preset charging voltage threshold is canceled by the determining module 22, charging is carried out according to the original charging strategy, and the charging identification of the charging voltage threshold is reset to the invalid state until the charging process is ended.

In practical application, the determining module 22 may preset a voltage monitoring range from 4.7V to 4.75V. Herein, the determining module 22 may preset the voltage value as 4.75V, when it is determined that the charging voltage collected is not greater than 4.75V, correspondingly the minimum voltage value 4.7V within the voltage range is set as the charging voltage threshold. At the moment, the preset voltage value is unequal to the preset voltage threshold. Alternatively, the voltage value also may be set as 4.7V, when it is determined that the charging voltage collected is not greater than 4.7V, correspondingly the minimum voltage value 4.7V within the voltage range is set as the charging voltage threshold. At the moment, the preset voltage value is equal to the charging voltage threshold.

During the charging process, when the charging voltage is greater than 4.75V, the determining module 22 may cancel the set charging voltage threshold of 4.7V, charge according to the original charging strategy, and reset the charging identification of the charging voltage threshold to the invalid state until the charging process is ended.

When the determining module 22 determines that the charging voltage is not greater than the preset voltage value, the determining module 22 is specifically configured to: control a part of power supply required for the terminal to be acquired from the charging adapter, and control another part of power supply required for the terminal to be acquired from the battery of the terminal. In this way, the charging adapter is maintained at a constant voltage state, namely the power of the charging adapter is maintained at a constant state to ensure that the PMIC of the terminal can efficiently convert electricity into an actual circuit, namely, the terminal is ensured to be charged efficiently.

In practical application, for example, when the terminal needs a current of 1.5A, the control module 23 controls the charging adapter to supply the terminal with a current of 1A, and controls the battery of the terminal to supply the terminal with a current of 0.5A.

In practical application, the collecting module 21, the determining module 22 and the control module 23 provided by the embodiments of the present disclosure may be implemented by a central processing unit (CPU), a digital signal processor (DSP) or a field-programmable gate array (FPGA) in the charging control apparatus in combination with specific circuits. The information prompting module 23 may be implemented by the CPU, the DSP or the FPGA in the charging control apparatus in combination with a display apparatus.

Compared with the prior art, according to the apparatus provided by this embodiment, special functions are unnecessary for a hardware platform of the terminal. When different types of charging adapters are blended in use to charge the terminal, the charging strategy provided by the apparatus will not conflict with the charging strategy of the terminal, and the apparatus can be modularized or applied to various terminals in the form of APP.

### Embodiment III

In this embodiment, the method provided by various embodiments of the present disclosure is described more specifically by taking a 10-inch Android PAD terminal product as an example. The 10-inch Android PAD terminal product is based on hardware platforms of master chips generally applied in the market and power management integrated circuits (PMICs) attached thereto.

When the terminal is charged, a schematic diagram of hardware connection is as shown in FIG. 3, and the terminal includes a PMIC 31, a battery 32 and a circuit 33.

The PMIC 31 is configured to receive a voltage inputted by the charging adapter 34 and supply power to the terminal after converting electrical energy of Point A supplied by the charging adapter 34.Specifically, power is supplied to the circuit 33 of the terminal through Point B and the battery 32 is charged through Point C, where the Point B is a voltage input port through which power is supplied to the circuit 33, and the Point C is a voltage input port through which he battery is charged.

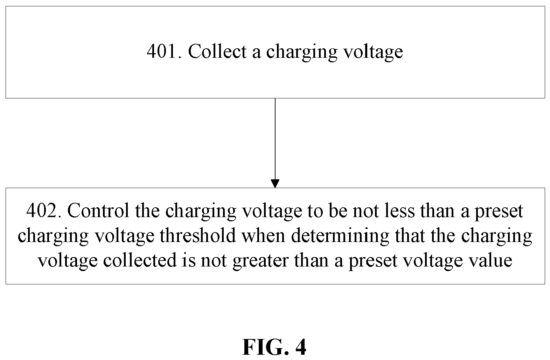

The circuit 33 includes: a WIFI circuit, and a global position system (GPS) circuit, etc. Specifically, as shown in FIG. 4, the charging control method in this embodiment mainly includes several steps as below.

Step 401: a charging voltage is collected.

In this step, in a kernel driver layer of the terminal, the charging voltage Vin (namely the voltage at Point A in FIG. 3) outputted by the charging adapter is collected by the PMIC 31. Step 402: the charging voltage is controlled to be not less than a preset charging voltage threshold when determining that the charging voltage collected is not greater than a preset voltage value.

In this step, the preset voltage value may be equal or unequal to the preset charging voltage threshold.

Before determining that the charging voltage is not greater than the preset voltage value, the PMIC 31 may define a charging identification Vcharg_flag of the charging voltage threshold in the application layer of the terminal, and define an information prompting function of the UI. Herein, the charging identification Vcharg_flag is used to identify whether the current consumed by the terminal exceeds the rated current of the charging adapter. An initial state of the charging identification Vcharg_flag of the charging voltage threshold is set as an invalid state.

The PMIC 31 may preset a voltage monitoring range from 4.7V to 4.75V. Herein, the voltage value may be preset as 4.75V, when it is determined that the charging voltage collected is not greater than 4.75V, the minimum voltage value 4.7V within the voltage range is set as the charging voltage threshold. At the moment, the preset voltage value is unequal to the preset voltage threshold. Alternatively, the voltage value also may be set as 4.7V, when it is determined that the charging voltage collected is not greater than 4.7V, correspondingly the minimum voltage value 4.7V within the voltage range is set as the charging voltage threshold. At the moment, the preset voltage value is equal to the charging voltage threshold. In a charging process, when the charging voltage is greater than 4.75V, setting of the charging voltage threshold of 4.7V is canceled, charging is carried out according to the original charging strategy, and the charging identification of the charging voltage threshold is reset until the charging process is completed.

In an embodiment, the voltage range is set between 4.7V and 4.75V, which may be concluded according to experiments. The voltage range is applicable to the vast majority of charging adapters whose rated voltage is 5V in the market, for example, charging adapters whose standard configurations of rated charging voltage/rated charging current are 5V/1A, 5V/500mA, 5V/1.5A and 5V/2A respectively. In addition, to charging adapters having other rated voltages, generally the charging voltage threshold thereof may be set up according to a standard of 0.3V less than the rated voltage value of the charging adapter, and then the voltage range may be determined through some experimental fine adjustments.

During a charging process, the PMIC 31 collects the charging voltage Vin outputted by the charging adapter, sets a state of the charging identification of the charging voltage threshold as a valid state when determining that the charging voltage is not greater than the preset voltage value, and presents the user with an information prompt box via the UI of the terminal to prompt the user that the current consumed by the terminal at the moment has already exceeded the rated current of the charging adapter and to suggest the user closing a related application running in background. In an embodiment, the information prompt box may also provide the user with a selective prompt whether to continue remind. When the user selects "no longer remind", namely after receiving an instruction of no longer reminding the user, in a subsequent charging process, when the state of the charging identification of the charging voltage threshold changes from a valid state to an invalid state or changes from the valid state to the invalid state, the information prompt box will not appear any more to avoid interfering with the user.

The state of the charging identification of the charging voltage threshold being an invalid state may include: a state value of the charging identification of the charging voltage threshold being 0; and correspondingly, the state of the charging identification of the charging voltage threshold being a valid state may include: the state value of the charging identification of the charging voltage threshold being 1.

In addition, the charging voltage also needs to be monitored in real time during a charging process, and the preset charging voltage threshold is canceled when the PMIC 31 determines that the charging voltage is greater than the preset voltage value.

Specifically, when the terminal is kept away from a high-power usage scenario, the charging adapter does not work in an overcurrent state any more, and thus the charging voltage outputted therefrom will gradually rise. When the charging voltage is greater than the preset voltage value, the preset charging voltage threshold is canceled, charging is carried out according to the original charging strategy, and the charging identification of the charging voltage threshold is reset to the invalid state until the charging process is completed.

In an embodiment, when the PMIC 31 determines that the charging voltage is not greater than the preset voltage value, the charging voltage is controlled to be not less than the set charging voltage threshold. Specifically, a part of power supply required for the terminal is controlled to be acquired from the charging adapter, and another part of power supply required for the terminal is controlled to be acquired from the battery of the terminal. In this way, the charging adapter is maintained at a constant voltage state, namely the power of the charging adapter is maintained at a constant state to ensure that the PMIC 31 of the terminal can efficiently convert electricity into an actual circuit, namely, the terminal is ensured to be charged efficiently.

Herein, to verify the practicability of the charging control method and apparatus provided by the embodiments of the present disclosure, in this embodiment, in the same external conditions, the terminal is charged respectively adopting a charging control scheme in the embodiments of the present disclosure and a charging control scheme in the prior art to better verify beneficial effects of the embodiments of the present disclosure.

Specifically, the same external conditions include, before charging the terminal, the working state of the terminal is set as below: maximum brightness of the screen, WIFI function enabled, hardware functions such as BlueTooth (BT) enabled, high-power radio-frequency emission, and a video being in a playback state. It is measured that the current consumed by the terminal at the moment is 1.78A; and then the terminal is charged by using a charging adapter whose standard configuration of rated charging voltage/rated charging current is 5V/1.5A.

When the terminal is connected with the charging adapter, the PMIC 31 converts the voltage of Point A in FIG. 3 to the sum of the voltage of Point B and the voltage of Point C, and converts the current of Point A to the sum of the current of Point B and the current of Point C, namely the charging adapter supplies required electrical energy to the circuit 33 in the terminal and supplies required electrical energy to the battery 32.

Herein, when the terminal is charged by using the charging control scheme in the embodiments of the present disclosure, currents of Point A, Point B and Point C in FIG. 3 are measured, it is measured that the current of Point B is 1.78A, at the moment the current of Point A is gradually pulled from the rated current 1.5A to 1.59, whereas the charging voltage Vin gradually drops from the rated voltage 5V to the charging threshold voltage 4.7V After the current/voltage supplied by the charging adapter is converted by the PMIC 31, the current/voltage supplied by the circuit 33 through Point B is 1.74A/3.8V, meanwhile the Point C battery inversely supplies power to the circuit 33 through Point B and supplies a current of 40mA to the circuit 33, the voltage of the charging adapter is maintained between 4.7V and 4.75V, and meanwhile the power of the charging adapter may not drop excessively in an overcurrent state. Therefore, the charging adapter reaches an equilibrium state.

When the charging voltage Vin gradually drops from the rated voltage 5V to the charging voltage threshold 4.7V, an information prompt box is presented to the user via the UI of the terminal to prompt the user that the current consumed by the terminal at the moment has already exceeded the rated current of the charging adapter and to suggest the user closing a related application running in background. Herein, the information prompt box may also provide the user with a selective prompt whether to continue remind. When the user selects "no longer remind", namely after receiving an instruction of no longer reminding the user, in a subsequent charging process, when the state of the charging identification of the charging voltage threshold changes from a valid state to an invalid state or changes from the valid state to the invalid state, the information prompt box will not appear any more to avoid interfering with the user.

When the terminal is charged by using the charging control method and apparatus in the prior art, it is measured that the charging current of Point A is gradually pulled from the rated current 1.5A to 1.62A, the charging voltage Vin gradually drops from 5V to 4.2V, and the power drops to 6.8W. Therefore, after electrical energy supplied by the charging adapter is converted by the PMIC 31, current/voltage supplied by a circuit 33 through Point B is merely 1.64A/3.8V, meanwhile a Point C battery is forced to inversely supply power to the circuit 33 through Point B and supply a current of 140mA to the circuit 33. Furthermore, as being used for a long time, the voltage and power of the charging adapter still drop gradually, and thus the charging adapter seriously generates heat, which may likely damage the charging adapter. Meanwhile, by using this method it is unable to prompt, on the terminal interface, the user that the charging adapter is in an overcurrent state.

Based on the foregoing charging control apparatus, the embodiments of the present disclosure further provide a terminal, including a basic structure of the charging control apparatus as shown in FIG. 2.

In conclusion, by adopting various embodiments provided by the present disclosure, various operations may be performed on the terminal in a high-power usage scenario; and in case that non-standard charging adapters are blended in use, the charging adapter is prevented from being damaged because it works in an overload state for a long time, and the PMIC is ensured to carry out conversion of electrical energy efficiently to supply power to the terminal. When the terminal is charged, not only user security can be ensured, but also efficient conversion of electrical energy can be ensured. Furthermore, an information prompt box is presented timely in case of current overload of the charging adapter, thereby improving the user experience.

Those skilled in the art should realize that the embodiments of the present disclosure may be provided as a method, a system or a computer program product. Therefore, the present disclosure may use forms of a hardware embodiment, a software embodiment, or an embodiment in combination of software and hardware aspects. Furthermore, the present disclosure may use forms of computer program products implemented on one or more computer storage media (including but not limited to a magnetic disk memory, an optical memory or the like) which includes a computer program code.

The present disclosure is described with reference to flowcharts and/or block diagrams according to the method, equipment (system) and a computer program product of the embodiments of the present disclosure. It is to be understood that each flow and/or block in the flowchart and/or block diagram as well as combination of flow and/or block in the flowchart and/or block diagram may be realized by computer program instructions. These computer program instructions may be provided to a general purpose computer, a special purpose computer, an embedded processor or processors of other programmable data processing equipment so as to generate a machine so that such a device configured to achieve functions designated in one or more flows of the flowchart and/or in one or more blocks of the block diagram is generated by means of instructions executed by computers or processors of other programmable data processing equipment.

These computer program instructions may be stored in a computer-readable memory which can lead a computer or other programmable data processing equipment to work in a particular way so that instructions stored in the computer-readable memory may generate a manufactured product comprising a command device which can achieve functions designated in one or more flows of the flowchart and/or in one or more blocks of the block diagram. These computer program instructions may also be loaded onto computers or other programmable data processing equipment so that a series of operation steps are executed on the computers or other programmable equipment to generate a processing achieved by computers, thus providing steps for achieving functions designated in one or more flows of the flowchart and/or in one or more blocks of the block diagram by means of instructions executed by computers or other programmable equipment.

The above are merely preferred embodiments of the present disclosure and are not intended to limit the scope of protection of the present disclosure.

## Claims

1. A charging control method, comprising the steps of:
collecting (101) a charging voltage; and
controlling (102) the charging voltage to be not less than a preset charging voltage threshold when determining that the collected charging voltage is not greater than a preset voltage value,
**characterized by** further comprising the steps of:
before determining that the charging voltage is not greater than a preset voltage value, the method further comprises: presetting a charging identification of the charging voltage threshold; and setting an initial state of the charging identification of the charging voltage threshold as an invalid state; and
when determining that the charging voltage collected is not greater than the preset voltage value, the method further comprises: setting a state of the charging identification of the charging voltage threshold as a valid state; and presenting to a user with a prompt for suggesting closing a background application according to the set valid state of the charging identification of the charging voltage threshold.

2. The method according to claim 1, further comprising:
monitoring the charging voltage in real time during a charging process, and canceling the preset charging voltage threshold when determining that the collected charging voltage is greater than the preset voltage value.

3. The method according to claim 1, further comprising:
resetting the state of the charging identification of the charging voltage threshold as the invalid state when determining that the charging voltage collected is greater than the preset voltage value.

4. The method according to claim 1, wherein the controlling the charging voltage to be not less than the charging voltage threshold comprises:
controlling a part of power supply required by a terminal to be acquired from a charging adapter and another part of power supply required by the terminal to be acquired from a battery of the terminal.

5. A charging control apparatus, comprising: a collecting module (21) and a determining module (22), wherein
the collecting module is configured to collect a charging voltage; and
the determining module is configured to control the charging voltage to be not less than a preset charging voltage threshold when determining that the charging voltage collected by the collecting module is not greater than a preset voltage value,
**characterized in that**:
the determining module (22) is further configured to: preset a charging identification of the charging voltage threshold before determining that the charging voltage is not greater than a preset voltage value; and set an initial state of the charging identification of the charging voltage threshold as an invalid state; and
the apparatus further comprises an information prompting module (23), the determining module (22) is further configured to set a state of the charging identification of the charging voltage threshold as a valid state when determining that the charging voltage collected is not greater than the preset voltage value; and the information prompting module (23) is configured to present a user with a prompt for suggesting closing a background application according to the set valid state of the charging identification of the charging voltage threshold.

6. The apparatus according to claim 5, wherein the determining module is further configured to monitor the charging voltage in real time during a charging process, and cancel the preset charging voltage threshold when determining that the charging voltage collected by the collecting module is greater than the preset voltage value.

7. The apparatus according to claim 5, wherein the determining module is further configured to reset the state of the charging identification of the charging voltage threshold as the invalid state when determining that the charging voltage collected is greater than the preset voltage value.

8. A terminal, comprising the charging control apparatus according to any one of claims 5-7.

9. A computer storage medium, comprising a set of instructions, wherein when the instructions are executed, at least one processor is caused to execute the charging control method according to any one of claims 1-4.

## Patentansprüche

1. Ladesteuerungsverfahren, umfassend die folgenden Schritte:
Aufnehmen (101) einer Ladespannung; und
Steuern (102) der Ladespannung, nicht geringer als ein voreingestellter Ladespannungsschwellenwert zu sein, wenn bestimmt wird, dass die aufgenommene Ladespannung nicht höher als ein voreingestellter Spannungswert ist,
**dadurch gekennzeichnet, dass** es überdies die folgenden Schritte umfasst:
vor einem Bestimmen, dass die Ladespannung nicht höher als ein voreingestellter Spannungswert ist, umfasst das Verfahren überdies: Voreinstellen einer Ladekennung des Ladespannungsschwellenwerts; und Einstellen eines Ausgangszustands der Ladekennung des Ladespannungsschwellenwerts als einen ungültigen Zustand; und
wenn bestimmt wird, dass die aufgenommene Ladespannung nicht höher als der voreingestellte Spannungswert ist, umfasst das Verfahren überdies: Einstellen eines Zustands der Ladekennung des Ladespannungsschwellenwerts als einen gültigen Zustand; und Anzeigen eines Hinweises für einen Benutzer mit einem Vorschlag, eine Hintergrundanwendung gemäß dem eingestellten gültigen Zustand der Ladekennung des Ladespannungsschwellenwerts zu schließen.

2. Verfahren nach Anspruch 1, überdies umfassend:
Überwachen der Ladespannung in Echtzeit während eines Ladevorgangs, und Abbrechen des voreingestellten Ladespannungsschwellenwerts, wenn bestimmt wird, dass die aufgenommene Ladespannung höher als der voreingestellte Spannungswert ist.

3. Verfahren nach Anspruch 1, überdies umfassend:
Zurücksetzen des Zustands der Ladekennung des Ladespannungsschwellenwerts als den ungültigen Zustand, wenn bestimmt wird, dass die aufgenommene Ladespannung höher als der voreingestellte Spannungswert ist.

4. Verfahren nach Anspruch 1, wobei das Steuern der Ladespannung, nicht geringer als der Ladespannungsschwellenwert zu sein, umfasst:
Steuern eines Teils von Energiezufuhr, der von einem Endgerät benötigt wird, um von einem Ladeadapter erfasst zu werden, und eines anderen Teils von Energiezufuhr, der von dem Endgerät benötigt wird, um von einer Batterie des Endgeräts erfasst zu werden.

5. Ladesteuerungseinrichtung, umfassend: ein Aufnahmemodul (21) und ein Bestimmungsmodul (22), wobei
das Aufnahmemodul ausgestaltet ist, eine Ladespannung aufzunehmen; und
das Bestimmungsmodul ausgestaltet ist, die Ladespannung zu steuern, nicht geringer als ein voreingestellter Ladespannungsschwellenwert zu sein, wenn bestimmt wird, dass die Ladespannung, die von dem Aufnahmemodul aufgenommen wird, nicht höher als der voreingestellte Spannungswert ist,
**dadurch gekennzeichnet, dass**:
das Bestimmungsmodul (22) überdies ausgestaltet ist zum: Voreinstellen einer Ladekennung des Ladespannungsschwellenwerts, bevor bestimmt wird, dass die Ladespannung nicht höher als ein voreingestellter Spannungswert ist; und Einstellen eines Ausgangszustands der Ladekennung des Ladespannungsschwellenwerts als einen ungültigen Zustand; und
die Einrichtung überdies ein Informationseingabeaufforderungsmodul (23) umfasst, das Bestimmungsmodul (22) überdies ausgestaltet ist, einen Zustand der Ladekennung des Ladespannungsschwellenwerts als einen gültigen Zustand einzustellen, wenn bestimmt wird, dass die aufgenommene Ladespannung nicht höher als der voreingestellte Spannungswert ist; und das Informationseingabeaufforderungsmodul (23) ausgestaltet ist, einem Benutzer einen Hinweis mit einem Vorschlag anzuzeigen, eine Hintergrundanwendung gemäß dem eingestellten gültigen Zustand der Ladekennung des Ladespannungsschwellenwerts zu schließen.

6. Einrichtung nach Anspruch 5, wobei das Bestimmungsmodul überdies ausgestaltet ist, die Ladespannung während eines Ladevorgangs in Echtzeit zu überwachen, und den voreingestellten Ladespannungsschwellenwert abzubrechen, wenn bestimmt wird, dass die Ladespannung, die von dem Aufnahmemodul aufgenommen wurde, höher als der voreingestellte Spannungswert ist.

7. Einrichtung nach Anspruch 5, wobei das Bestimmungsmodul überdies ausgestaltet ist, den Zustand der Ladekennung des Ladespannungsschwellenwerts als den ungültigen Zustand zurückzusetzen, wenn bestimmt wird, dass die aufgenommene Ladespannung größer ist als der voreingestellte Spannungswert.

8. Endgerät, das die Ladesteuerungseinrichtung gemäß einem der Ansprüche 5 bis 7 umfasst.

9. Computerspeichermedium, umfassend einen Satz von Anweisungen, wobei, wenn die Anweisungen ausgeführt werden, mindestens ein Prozessor veranlasst wird, das Ladesteuerungsverfahren nach einem der Ansprüche 1 bis 4 auszuführen.

## Revendications

1. Procédé de contrôle de chargement, comprenant les étapes suivantes :
la collecte (101) d'une tension de chargement ; et
le contrôle (102) de la tension de chargement afin qu'elle ne soit pas inférieure à un seuil de tension de chargement prédéfini lorsqu'il est déterminé que la tension de chargement collectée n'est pas supérieure à une valeur de tension prédéfinie,
**caractérisé en ce qu'**il comprend en outre les étapes suivantes :
avant de déterminer que la tension de chargement n'est pas supérieure à une valeur de tension prédéfinie, le procédé comprend en outre : la prédéfinition d'une identification de chargement du seuil de tension de chargement ; et la définition d'un état initial de l'identification de chargement du seuil de tension de chargement comme un état invalide ; et
lorsqu'il est déterminé que la tension de chargement collectée n'est pas supérieure à la valeur de tension prédéfinie, le procédé comprend en outre : la définition d'un état de l'identification de chargement du seuil de tension de chargement comme un état valide ; et la présentation à un utilisateur avec une invite destinée à suggérer la fermeture d'une application en arrière-plan selon l'état valide défini de l'identification de chargement du seuil de tension de chargement.

2. Procédé selon la revendication 1, comprenant en outre :
la surveillance de la tension de chargement en temps réel pendant un processus de chargement, et l'annulation du seuil de tension de chargement prédéfini lorsqu'il est déterminé que la tension de chargement collectée est supérieure à la valeur de tension prédéfinie.

3. Procédé selon la revendication 1, comprenant en outre :
la redéfinition de l'état de l'identification de chargement du seuil de tension de chargement comme l'état invalide lorsqu'il est déterminé que la tension de chargement collectée est supérieure à la valeur de tension prédéfinie.

4. Procédé selon la revendication 1, dans lequel le contrôle de la tension de chargement afin qu'elle ne soit pas inférieure au seuil de tension de chargement comprend :
le contrôle d'une partie de l'alimentation électrique requise par un terminal et qui doit être acquise à l'aide d'un adaptateur de chargement et d'une autre partie de l'alimentation électrique requise par le terminal et qui doit être acquise à l'aide d'une batterie du terminal.

5. Appareil de contrôle de chargement, comprenant : un module de collecte (21) et un module de détermination (22), dans lequel
le module de collecte est configuré pour collecter une tension de chargement ; et
le module de détermination est configuré pour contrôler la tension de chargement afin qu'elle ne soit pas inférieure à un seuil de tension de chargement prédéfini lorsqu'il est déterminé que la tension de chargement collectée par le module de collecte n'est pas supérieure à une valeur de tension prédéfinie,
**caractérisé en ce que** :
le module de détermination (22) est en outre configuré pour : prédéfinir une identification de chargement du seuil de tension de chargement avant de déterminer que la tension de chargement n'est pas supérieure à une valeur de tension prédéfinie ; et définir un état initial de l'identification de chargement du seuil de tension de chargement comme un état invalide ; et
l'appareil comprend en outre un module d'invite d'information (23), le module de détermination (22) étant en outre configuré pour définir un état de l'identification de chargement du seuil de tension de chargement comme un état valide lorsqu'il est déterminé que la tension de chargement collectée n'est pas supérieure à la valeur de tension prédéfinie ; et le module d'invite d'information (23) est configuré pour présenter à un utilisateur une invite destinée à suggérer de fermer une application en arrière-plan selon l'état valide défini de l'identification de chargement du seuil de tension de chargement.

6. Appareil selon la revendication 5, dans lequel le module de détermination est en outre configuré pour surveiller la tension de chargement en temps réel pendant un processus de chargement, et pour annuler le seuil de tension de chargement prédéfini lorsqu'il est déterminé que la tension de chargement collectée par le module de collecte est supérieure à la valeur de tension prédéfinie.

7. Appareil selon la revendication 5, dans lequel le module de détermination est en outre configuré pour réinitialiser l'état de l'identification de chargement du seuil de tension de chargement comme l'état invalide lorsqu'il est déterminé que la tension de chargement collectée est supérieure à la valeur de tension prédéfinie.

8. Terminal, comprenant l'appareil de contrôle de chargement selon l'une quelconque des revendications 5 à 7.

9. Support de stockage informatique, comprenant un ensemble d'instructions, dans lequel, lorsque les instructions sont exécutées, au moins un processeur exécute le procédé de contrôle de chargement selon l'une quelconque des revendications 1 à 4.
